Europäisches Patentamt

European Patent Office

Office européen des brevets

(19)

(11) **EP 1 557 924 A2**

(12) **EUROPEAN PATENT APPLICATION**

(43) Date of publication:
**27.07.2005 Bulletin 2005/30**

(51) Int Cl.⁷: **H02J 3/01**

(21) Application number: **05000553.7**

(22) Date of filing: **13.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **20.01.2004 IT TO20040020**

(71) Applicant: **RAI RADIOTELEVISIONE ITALIANA (S.p.A.)**
**00195 Roma (IT)**

(72) Inventors:
• **La Rosa, Mario**
**00168 Roma (IT)**
• **Sacco, Bruno**
**10154 Torino (IT)**

(74) Representative: **Spandonari, Carlo, Dr. Ing.**
**Spandonari & Modiano s.r.l.**
**corso Duca degli Abruzzi 16**
**10129 Torino (IT)**

(54) **A simulator of complex electrical loads**

(57)     A digital computer (18) is connected to drive a resistive load (12) and and active filter (14), both connected in parallel across input terminals (10) to which a supply voltage is applied. Based on measures of the current flowing into the input terminals and on a current curve characterizing the complex load, the computer adjusts the resistive load so that it will draw an desired active current component at the fundamental frequency and drives the active filter so that it will inject into the input terminals, at each period of the alternate voltage, a current waveshape such that the measured current coincides with the desired current.

Fig. 1

EP 1 557 924 A2

**Description**

This invention is concerned with a simulator of complex electrical loads, such as high-power three-phase loads, particularly for setting up electrical power supplies for distorting loads of different types.

In the production of television services, be they news or entertainment, it is often necessary today to set up, as temporary structures, electrical equipment drawing a large power and comprising heterogeneous loads, including, e.g., scene-lighting lamps, cameras, audio and video electronic equipment, radiotransmitters, etc. Such loads asre often supplied by high-frequency switching rectifiers-regulators, which draw power in short and high-amplitude pulses, and therefore appear as non-linear loads.

Moreover, scenic lights, whose intensity is often adjusted by trimming their supply voltage, are themselves often nonlinear loads, thru which the distorting current is theoretically highest when the level is about 50%, although in practice this maximum may be shifted due to a non-ideal behavior of the electronic power switches (e.g. TRIACs) or due to filters connected on the power line.

Similar situations arise in other environments, such as when setting up concerts or other public cerimonies, as well as in industrial environments.

Accordignly, in the operation of an three-phase electrical plant with distributed neutral, which supplies loads as exemplified above, numerours different problems may arise, such as:

- a high value of the peak factor (typically around 2,5-3);

- a low value of the power factor (typically around 0,6-0,7);

- strong currents in the neutral wires, due to unbalance and to the composition of third-order harmonics;

- electromagnetic noise, either radiated or conducted;

- distorsion of the supply voltage.

The above problems are combined in variable proportions, depending on specific situations, giving rise to various shortcomings, such as poor overall efficiency of the plant, untimely opening of fuses, mechanical vibration, flicker of light sources, malfunction of switches and triggering levels depending on frequency, etc. In particular, such shortcomings compel the designer to oversize machines, switching devices and power cables, to protect the neutral wire from overcurrents, to equip both power and signal networks with special shields and filters. However, it is difficult or impossible to design a plant in advance, because this would involve a preliminary setup of the entire plant, which comprises equipment that is often quite expensive and bulky, in a mere attempt to perform tests or checkouts.

A main object of the invention is therefore to provide a simulator of complex electrical loads enabling the user to execute tests, planning and checks on performance in supply systems, particularly high-power supplies.

The above object is attained by the invention, together with other objects and advantages that will appear from the following disclosure, by providing a simulator of complex electrical loads having the features recited in claim 1. The dependent claims point out further advantageous features of the invention.

A few preferred embodiments of the invention are described below, with reference to the attached drawings, wherein:

Fig. 1 is a block diagram of a simulator of complex electrical loads according to a first embodiment of the invention;

Fig. 2 is a flow chart of the operation of the simulator of Fig. 1; and

Fig. 3 is a block diagram of a simulator of complex electrical loads according to a second embodiment of the invention.

For the sake of simplicity, the invention will be explained with reference to a single-phase, a.c. electrical supply, although the invention is readily applicable to a three-phase supply, by merely duplicating the illustrated circuits for each of the three phases.

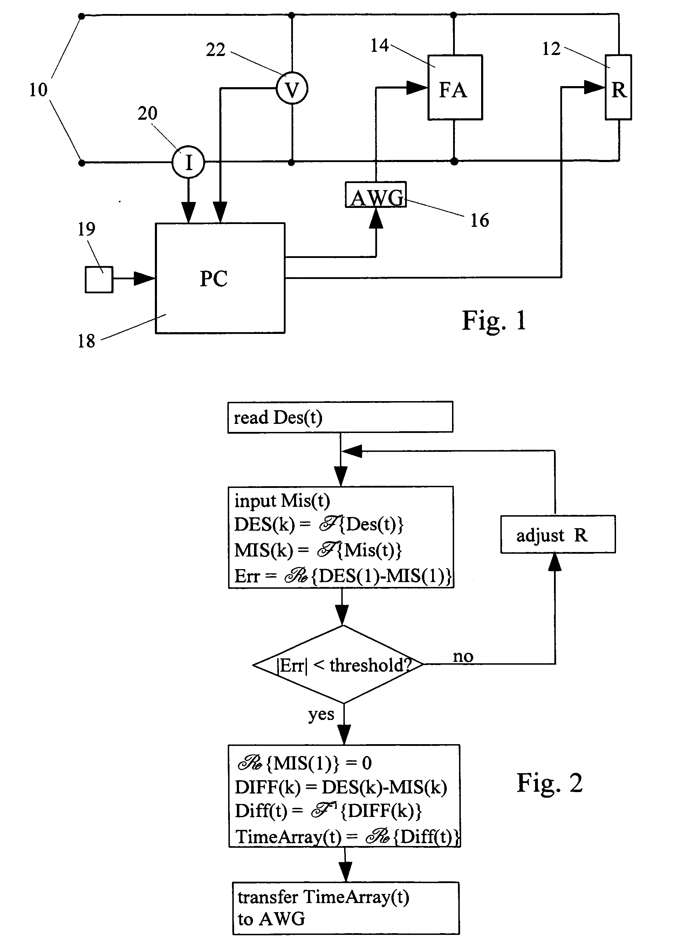

In Fig. 1, a single-phase, a.c. electrical supply line, e.g. at 380 V, 50 Hz, is connected to the input terminals 10 of a resistive load 12, the latter being adjustable by an electrical control, such as a rheostat under control of a step-motor, or other type of electrically controllable actuator (not shown). An active filter, or active harmonic compensator 14, driven by a waveshape generator 16, is also shunt-connected across the input terminals 10.

The active filter is preferably of the type based on switched copacitors, as described, for instance, in Mohan, Undeland, Robbins, *Power Electronics,* Wiley, 1995; or in P. N. Enjeti, W. Shiren, P. Packebush, I. Pitel, "Analysis and Design of a new

Active Power Filter to Cancel Neutral Current harmonics in Three-phase Four-wire Electric Distribution Systems", *IEE Trans. Ind. Applic.,* vol. 30 no. 6, Dec 1994; or in M. Mc Granaghan, L. Tang, S Bernard, S. Papoz, "Evaluation of Active Filter Design and Performance Using a Detailed EMTP Model", *PQA 95,* May 1995.

Active filters of this kind are marketed, for instance, by MGE Italia SpA, in Agrate Brianza, under the trade name "Filtro attivo THM" or "Sine Wave THM".

A digital computer 18 is connected for receiving, in real time, current samples measured by an ammeter 20 that is series-connected with terminals 10, over one period of the fundamental frequency of the supply, in this case 20 msec, as driven by a trigger signal obtained from a sensor 22, which delivers a zero-threshold signal. Computer 18 is also connected to drive waveshape generator 16, with the purpose of causing a desired waveshape to be generated, as further explained below. Finally, computer 18 is programmed for receiving data defining a desired complex load from an operator. In the preferred embodiment, the desired complex load is defined by a current curve, which also corresponds to one period of the alternate supply, and represented as a table in a file stored, for instance, on a disk 19.

It should be noted that, for simplicity, Fig. 1 does not show the analog-to-digital and digital-to analog converters required in the interfaces between computer 18 and the various circuit components.

Computer 18 is programmed for controlling waveshape generator 16 as is described below with reference to Fig. 2, which shows the program loop that is performed.

When the above apparatus is run, computer 18 reads, e.g. from a disk, a table Des(t), representing the current values desired at successive instants t = 0, 1, 2, ..., n over a single period of the 50-Hz alternate voltage, therefore over 20 msec. At an instant coinciding with a zero of the alternate supply voltage, determined by the trigger signal coming from the voltage sensor 22, the computer starts a set-up routine by which it acquires from ammeter 20 a sequence of measured current values Mis(t) corresponding to the above mentioned values Des(t), over a single period of the supply voltage.

The program in computer 18 then proceeds to compute the discrete Fourier transforms:

$$DES(k) = \mathscr{F}\{Des(t)\}$$

$$MIS(k) = \mathscr{F}\{Mis(t)\}$$

where k = 1, 2, ..., m, for the fundamental, the second harmonic, etc., respectively. It will be understood that, if the real part of the difference of DES(1) and MIS(1), i. e. The difference between the fundamentals, is null, that means that the value of resistance 12 is right, in the sense that it coincides with the desired input of active power, while a nonzero value may be used to adjust the resistance. Accordingly, the computer adjusts resistance 12 and cyclically repeats the above listed steps, until the absolute value of the error |Err| has become zero, or has been reduced below a predetermined threshold. At this point, resistance 12 has the correct value corresponding to the active power input to the desired complex load.

After exiting the set-up routine, the program sets the real part of MIS(1) to zero, and computes for each harmonic the difference:

$$DIFF(k) = DES(k) - MIS(k)$$

and then reverts to the tuime domain by computing the inverse transform:

$$\mathrm{Diff(t)} = \mathscr{F}^{-1}\{\mathrm{DIFF(k)}\}$$

The real part of Diff(t), TimeArray(t) = $\mathscr{R}_e$ {Diff (t)}, represents an error waveshape that is applied to waveshape generator 16 for driving active filter 14. A person skilled in the art will understand that an active filter so driven injects into the line, at each period of the 50 Hz alternate voltage, a current that will supplement the current through resistance 12, so that a total current is obtained having a shape corresponding to the set curve, thereby simulating a desired overall load.

The adjustable resistive load may be a rheostat driven by a step motor, although it could be a rheostat or a bank of resistances that is manually adjusted by an operator, under the direction of an error indication that is progressively delivered by the computer.

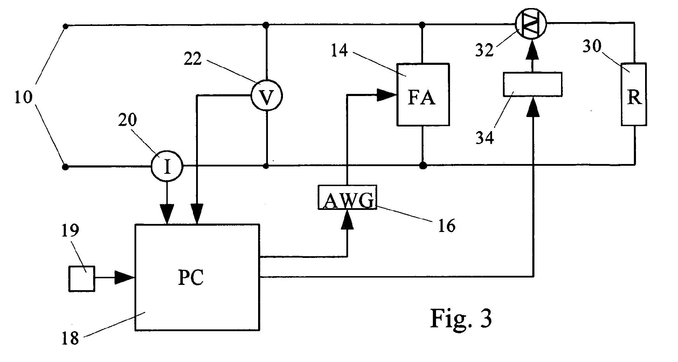

Fig. 3 shows another preferred embodiment of the invention, which is more versatile than the previous one. As can be seen in Fig. 3, the diagram of the simulator is mainly similar to the diagram of Fig. 1, and identical parts are indicated by the same reference numbers. The essential difference is that here the resistive load comprises a fixed resistance 30 with a series connected TRIAC 32, the latter being driven by a triggering circuit 34, which is itself driven by computer 18. The value of fixed resistance 30 is designed to correspond to the maximum power value for which the simulator is intended. In this case the adjustment of the resistance is obtained by the computer by changing the TRIAC's conduction angle, or duty cycle, so that the appropriate value of equivalent resistance is obtained.

It should of course be noted that the TRIAC of Fig. 3, beside changing the average value of the current, also generates spurious harmonics which are superposed onto the variantions of the current. However, as a person skilled in the art will readily appreciate, the adjustment cycle of Fig. 2 also automatically considers these harmonics, which contribute to the values Mis(t) and therefore take part in computing transforms and inverse transforms, and consequently in the formation of the waveshape generated by the waveshape generator 16.

It should also be noted that both the rheostat of Fig. 1 and the TRIAC of Fig. 3 may be liable to drift, of thermal or other origin, which may over the time give rise to deviations of the actual value of the equivalent resistance from the nominal value that was calculated during the initial set-up routine. Accordingly, the set-up routine is preferably performed again at intervals, e.g. at intervals of 60 seconds.

The execution of the load simulation algorithm is easily programmable for a person skilled in the art, for both the embodiments described, on the basis of the flowchart of Fig. 2. Persons skilled in the art will also readily implement the simulator for three-phase loads, both in delta and Y connection, by mere duplication of the circuits described for single-phase loads for each of the three phases.

Obviously, it can also be envisaged that computer 18 is replaced with a dedicated control apparatus, which may incorporate also certain accessory parts such as the ammeter or the waveshape generator.

The above and other changes and variations to the preferred embodiments described above, such as a person skilled in the art may devise based on the teachings given above, are to be regarded as comprised withn the scope of the invention.

**Claims**

1. A simulator of complex electrical loads, for drawing alternate electric power on a pair of input terminals (10) according to a desired current curve, charcterized in that it comprises:

   - an adjustable resistive load (12) connected to said input terminals;

   - an active filter (14) connected in parallel to said electric load and driven by a waveshape generator (16) for injecting corresponding current waveshapes into the input terminals;

   - an ammeter (20) measuring the current flowing into the input terminals;

   - control means (18) receiving the value of the current measured by the ammeter (20) and programmed for adjusting said resistive load (12) so that it draws said desired active current component at the fundamental frequency and for driving said waveshape generator so that the active filter injects into the input terminals, at each period of the alternate voltage, a current shape such that said measured current coincides with said desired current.

2. The simulator of complex electrical loads according to claim 1, **characterized in that** said control means comprise a digital computer (18).

3. The simulator of complex electrical loads according to claim 2, **characterized in that** the digital computer (18) is programmed for executing an operative cycle comprising the following steps:

   - determining the value of active current corresponding to the component at fundamental frequency of said measured current, and adjusting said resistive load (12) so that it draws said value of active current;

   - determining the deviation of the spectrum of the measured current from the spectrum of the desired current, with exclusion of said active current at the fundamental frequency, and programming said waveshape generator (16) for generating a waveshape corresponding to sadi spectrum deviation.

4. The simulator of complex electrical loads according to claim 3, **characterized in that**, in order to determine said value of active current corresponding to the component at the fundamental frequency of the measured current, the computer (18) computes the discrete Fourier transforms of both the desired current and the measured current, computes the difference between the real parts of their components at the fundamental frequency and adjusts the value of said resistive load (12) to substantially cancel said difference.

5. The simulator of complex electrical loads according to claim 4, **characterized in that**, in order to determine the deviation of the spectrum of the measured current from the spectrum of the desired current, with exclusion of said active current at the fundamental frequency, the computer (18) computes the difference between the discrete Fourier transforms of both the desired current and the measured current after setting to zero the component at the fundamental frequency of the latter, computes the discrete Fourier inverse transform of the last-mentioned difference, and programs the waveshape generator (16) with said inverse tranform.

6. The simulator of complex electrical loads according to any of claims 1 to 5, **characterized in that** said resistive load is a rheostat (12) driven by said control means so that it corresponds to said desired active component.

7. The simulator of complex electrical loads according to any of claims 1 to 5, **characterized in that** said resistive load is a fixed resistor (30) connected in series with a controlled switch (32) driven over a conduction angle corresponding to a predetermined first-harmonic current.

8. The simulator of complex electrical loads according to claims 4 and 7, **characterized in that**, in order to adjust the resistive load (30, 32), the computer (18) adjusts said conduction angle of the controlled switch via a triggering circuit (34).

9. The simulator of complex electrical loads according to any of claims 2 to 8, **characterized in that** the digital computer (18) periodically repeats the adjustment of the resistive load (12; 30, 32).

Fig. 1

Fig. 2

read Des(t)

input Mis(t)
$DES(k) = \mathscr{F}\{Des(t)\}$
$MIS(k) = \mathscr{F}\{Mis(t)\}$
$Err = \mathscr{Re}\{DES(1)\text{-}MIS(1)\}$

adjust R

$|Err| < threshold?$

no

yes

$\mathscr{Re}\{MIS(1)\} = 0$
$DIFF(k) = DES(k)\text{-}MIS(k)$
$Diff(t) = \mathscr{F}^{-1}\{DIFF(k)\}$
$TimeArray(t) = \mathscr{Re}\{Diff(t)\}$

transfer TimeArray(t)
to AWG

Fig. 3